# EUROPÄISCHE PATENTANMELDUNG

(11) **EP 2 639 930 A2**
(43) Veröffentlichungstag der Anmeldung: **18.09.2013**
(21) Anmeldenummer: 13154094.0
(22) Anmeldetag: 05.02.2013
(51) Int. Cl.: H02J 13/00

(54) **Spannungsversorgung für einen Bus eines Bussystems sowie Bussystem**

(30) Priorität: 15.03.2012 DE 102012204073
(71) Anmelder: Siemens Aktiengesellschaft, 80333 München (DE)
(72) Erfinder: Fichtner, Norbert, 84069 Schierling (DE); Hoch, Peter, 93080 Pentling (DE)

(57) **Zusammenfassung**

Die Erfindung betrifft eine Spannungsversorgung (3) für einen Bus (2) eines Bussystems (1) der Gebäudeinstallationstechnik, aufweisend eine Stromversorgung (1), eine Busankopplung (11) und eine Erfassungseinheit (12) zum Feststellen von Betriebsdaten, wobei die Spannungsversorgung (3) insbesondere eine Speichereinheit (13) zum Speichern der festgestellten Betriebsdaten aufweist, sowie ein Bussystem (1) für die Gebäudeinstallationstechnik in einem Bus (2) mit mindestens einem an dem Bus (2) angekoppelten Busgerät (4) und zumindest eine an dem Bus (2) angekoppelten derartigen Spannungsversorgung (3).

## Beschreibung

Die vorliegende Erfindung betrifft eine Spannungsversorgung für einen Bus eines Bussystems der Gebäudeinstallationstechnik, aufweisend eine Stromversorgung, eine Busankopplung und eine Erfassungseinheit zum Feststellen von Betriebsdaten sowie ein Bussystem für die Gebäudeinstallationstechnik mit einem Bus, mit mindestens einem an dem Bus angekoppelten Busgerät und zumindest einer an dem Bus angekoppelten Spannungsversorgung.

In einem Bussystem der Gebäudeinstallationstechnik können Busgeräte beliebig an der als Bus bezeichneten Busleitung verteilt sein. Über den Bus erfolgt sowohl die Spannungsversorgung der Busgeräte als auch die Datenübertragung. Bei den bekannten Bussystemen können bis zu zwei Hauptspannungsversorgungen vorgesehen sein. Diese Hauptspannungsversorgungen können durch bis zu acht Hilfsspannungsversorgungen unterstützt werden. Kein Busgerät darf weiter als 350 Meter von einer Hauptspannungsversorgung entfernt angeschlossen sein. Aber auch bei Einhaltung dieser Regel kann es vorkommen, dass zumindest eine der beiden Hauptspannungsversorgungen im Überlastbereich betrieben wird.

Bei bekannten Hauptspannungsversorgungen, im Folgenden Spannungsversorgungen genannt, ist bekannt, einen derartigen Zustand, das heißt einen Betrieb im Überlastbereich, durch eine optische Anzeige anzuzeigen. Hierfür können insbesondere eine oder mehrere LEDs eingesetzt werden. Bei einer leuchtenden Anzeige wird dem Benutzer des Bussystems mitgeteilt, dass aktuell ein Betrieb der Spannungsversorgung im Überlastbereich vorliegt. Der Benutzer kann daraufhin die Anordnung der Busgeräte und/oder der Spannungsversorgungen im Bussystem optimieren, um einen Betrieb der Spannungsversorgung im Überlastbereich zu verhindern.

Diese bekannte optische Anzeige eines Betriebes im Überlastbereich ist jedoch für einen Betrieb im Überlastbereich, der nur zeitlich begrenzt auftritt, nicht geeignet. Die Spannungsversorgung kann sich zeitlich begrenzt im Überlastbereich befinden, ohne dass dies der Benutzer des Bussystems bemerkt. Hiermit können ungünstige Auswirkungen, z.B. auf die Lebensdauer, verbunden sein.

Es ist Aufgabe der vorliegenden Erfindung, die voranstehend beschriebenen Nachteile bekannter Spannungsversorgungen für einen Bus eines Bussystems sowie eines Bussystems zumindest teilweise zu beheben. Insbesondere ist es Aufgabe der vorliegenden Erfindung, eine Spannungsversorgung für einen Bus eines Bussystems sowie ein Bussystem zu schaffen, die in kostengünstiger und einfacher Weise die Lebensdauer einer eingesetzten Spannungsversorgung verlängern.

Voranstehende Aufgabe wird gelöst durch eine Spannungsversorgung mit den Merkmalen des Anspruches 1 sowie durch ein Bussystem mit den Merkmalen des Anspruches 12. Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Spannungsversorgung beschrieben sind, selbstverständlich auch im Zusammenhang mit dem erfindungsgemäßen Bussystem und jeweils umgekehrt, sodass bezüglich der Offenbarung zu den einzelnen Erfindungsaspekten stets wechselseitig Bezug genommen wird beziehungsweise werden kann.

Gemäß einem ersten Aspekt der Erfindung wird die Aufgabe durch eine Spannungsversorgung für einen Bus eines Bussystems der Gebäudeinstallationstechnik, aufweisend eine Stromversorgung, eine Busankopplung und eine Erfassungseinheit zum Feststellen von Betriebsdaten, gelöst. Insbesondere ist die erfindungsgemäße Spannungsversorgung dadurch gekennzeichnet, dass eine Speichereinheit zum Speichern der festgestellten Betriebsdaten vorgesehen ist.

Die erfindungsgemäße Spannungsversorgung ist dabei für einen Betrieb an einem Bus eines Bussystems in der Gebäudeinstallationstechnik vorgesehen. Als Bussysteme können dabei insbesondere ein KNX-Bus, ein KONNEX-TP1, ein EIB eingesetzt werden. Selbstverständlich sind auch alle anderen Bussysteme der Gebäudeinstallationstechnik denkbar. Über eine Stromversorgung wird die Spannungsversorgung für einen Bus eines Bussystems mit der nötigen elektrischen Energie versorgt. Eine Busankopplung sorgt für die Verbindung der Spannungsversorgung zum Bus, wobei hierbei insbesondere sowohl elektrische Energie als auch Daten über die Verbindung übertragen werden können. Ferner weist die Spannungsversorgung eine Erfassungseinheit auf, die zum Feststellen von Betriebsdaten ausgebildet ist. Dadurch können die Betriebsdaten der Spannungsversorgung, wie beispielsweise Spannung, Stromverbrauch und/oder Temperatur, erkannt werden. Durch das Vorsehen einer Speichereinheit zum Speichern der festgestellten Betriebsdaten ist es möglich, diese Betriebsdaten zeitunabhängig zu überwachen. Dies ist insbesondere von Vorteil, wenn sich die Betriebsdaten zeitlich ändern. Dadurch ist es möglich eine, insbesondere zeitunabhängige, Information über die Betriebsdaten des Betriebs der Spannungsversorgung zu erhalten. Besonders vorteilhaft ist es, dass auch temporäre Betriebsdaten, das heißt Betriebsdaten die sich über die Zeit ändern können, auf diese Weise erfasst werden können. Insbesondere ist ein Betrieb der Spannungsversorgung in einem Überlastbereich, der nur zeitlich begrenzt auftritt, feststellbar und auch zu einem späteren Zeitpunkt, wenn dieser Betrieb der Spannungsversorgung im Überlastbereich nicht mehr vorherrscht, erkennbar. Der Benutzer einer derartigen erfindungsgemäßen Spannungsversorgung ist somit in der Lage, auch auf nur zeitweilig auftretende negative Betriebszustände zu reagieren. Negative Betriebszustände, wie beispielsweise ein Betrieb im Überlastbereich, können so für die Spannungsversorgung für die Zukunft zuverlässig vermieden werden. Eine Alterung der Spannungsversorgung, insbesondere aufgrund eines immer wiederkehrenden Betriebs im Überlastbereich, kann somit vermieden werden. Eine erfindungsgemäße Spannungsversorgung kann somit eine höhere Lebensdauer aufweisen. Dies bedeutet insbesondere auch einen Kostenvorteil, da die erfindungsgemäße Spannungsversorgung weniger oft alterungsbedingt ausgetauscht werden muss.

Bei einer erfindungsgemäßen Spannungsversorgung kann ferner vorgesehen sein, dass als Betriebsdaten ein Strom, eine Spannung, eine Überlast und/oder eine Temperatur der Spannungsversorgung feststellbar sind. Selbstverständlich sind auch weitere Parameter denkbar, die den Betrieb der Spannungsversorgung charakterisieren. Dabei ist beispielsweise denkbar, die Betriebsdaten auf besonders einfache Art und Weise festzustellen. So ist zum Beispiel im Falle einer Überlast denkbar, eine einfache 1-Bit-Information abzuspeichern, das heißt ob eine Überlast im Messzeitraum aufgetreten ist oder nicht. Selbstverständlich ist auch eine zeitaufgelöste Speicherung denkbar. Insbesondere kann so zeitaufgelöst beispielsweise der Stromverbrauch der Spannungsversorgung, der Spannungsverlauf auf dem Bus, Auftreten von Überlast und/oder die Temperatur der Spannungsversorgung aufgezeichnet werden. Durch eine Auswertung derartig zeitaufgelöst gespeicherter Betriebsdaten ist es insbesondere auch möglich, den Zeitpunkt eines Betriebs der Spannungsversorgung im Überlastbereich festzustellen. Auch dies ermöglicht dem Benutzer der erfindungsgemäßen Spannungsversorgung, diese derart am Bussystem anzuordnen, dass solche Betriebe im Überlastbereich zukünftig nicht mehr auftreten. Auch dadurch kann die Lebensdauer einer erfindungsgemäßen Spannungsversorgung erhöht werden.

Ferner kann bei der erfindungsgemäßen Spannungsversorgung vorgesehen sein, dass in der Speichereinheit Minimal- und/oder Maximalwerte der festgestellten Betriebsdaten speicherbar sind. Insbesondere kann dabei vorgesehen sein, die Minimal- und/oder Maximalwerte der festgestellten Betriebsdaten zusätzlich oder alternativ zur einfachen Speicherung der festgestellten Betriebsdaten abzuspeichern. Durch die Speicherung der Minimal- und/oder Maximalwerte ist es möglich, auf besonders einfache Art und Weise den Parameterraum der Betriebsdaten zu ermitteln. Der Benutzer einer erfindungsgemäßen Spannungsversorgung kann somit beim Auswerten der gespeicherten Daten sofort feststellen, ob sich die Betriebsdaten innerhalb der üblichen Grenzen bewegen. Bei einem Abweichen des gemessenen Parameterraumes der Betriebsdaten vom vorgesehenen Parameterraum kann wiederum der Benutzer die Position insbesondere der Spannungsversorgung am Bussystem derart verändern, dass ein Betrieb der Spannungsversorgung im Normallastbereich zu jeder Zeit sichergestellt werden kann.

Besonders bevorzugt kann bei einer erfindungsgemäßen Spannungsversorgung vorgesehen sein, dass die Spannungsversorgung eine Ausgabeeinrichtung zum zumindest teilweisen Ausgeben der in der Speichereinheit gespeicherten Betriebsdaten aufweist. Durch die Ausgabeeinrichtung ist ein Auslesen beziehungsweise ein Anzeigen der gespeicherten Daten möglich. Der Benutzer einer erfindungsgemäßen Spannungsversorgung kann somit auf die gespeicherten Daten zugreifen. Dadurch wird der Benutzer in die Lage versetzt auf die gespeicherten Daten und damit insbesondere auf die Information über einen möglichen Betrieb der Spannungsversorgung im Überlastbereich zu reagieren. Insbesondere kann dabei vorgesehen sein, dass über die Ausgabeeinrichtung die gespeicherten Betriebsdaten ganz oder nur teilweise ausgegeben werden. So kann beispielsweise vorgesehen sein, dass über die Ausgabeeinrichtung nur Minimal- und/oder Maximalwerte der gespeicherten Betriebsdaten ausgegeben werden. Auch kann vorgesehen sein, dass der Benutzer wählen kann, welcher Teil der gespeicherten Betriebsdaten über die Ausgabeeinrichtung ausgegeben werden kann.

In einer bevorzugten Weiterentwicklung einer erfindungsgemäßen Spannungsversorgung kann vorgesehen sein, dass die Ausgabeeinrichtung eine optische und/oder eine akustische Anzeige aufweist. Insbesondere kann eine derartige Ausgabeeinrichtung beziehungsweise eine derartige Anzeige direkt an der Spannungsversorgung angeordnet sein. Eine derartige Anzeige kann somit insbesondere jederzeit ausgelesen werden. Durch eine optische Anzeige kann der Benutzer einer erfindungsgemäßen Spannungsversorgung sehen beziehungsweise sich anzeigen lassen, welche Betriebsdaten gespeichert sind. Eine akustische Anzeige erlaubt insbesondere auch eine Warnung ohne direkten Sichtkontakt des Benutzers zur Spannungsversorgung. Dabei kann vorteilhafterweise vorgesehen sein, dass eine akustische Anzeige eine derartige Warnung immer dann ausgibt, wenn die gespeicherten Betriebsdaten auf einen Betrieb der Spannungsversorgung im Überlastbereich schließen lassen. Der Betrieb im Überlastbereich muss dafür nicht mehr andauern, da dieser aus den gespeicherten Betriebsdaten erkannt werden kann.

Des Weiteren kann bei einer erfindungsgemäßen Spannungsversorgung vorgesehen sein, dass die Ausgabeeinrichtung eine Schnittstelle aufweist. Eine derartige Schnittstelle kann dabei kabelgebunden oder kabelungebunden sein. Eine Schnittstelle erlaubt die Auslese der kompletten gespeicherten Betriebsdaten in eine, insbesondere externe, Analyseeinrichtung. In dieser Analyseeinrichtung kann basierend auf den gespeicherten und ausgelesenen Daten ein, insbesondere zeitliches, Betriebsprofil der erfindungsgemäßen Spannungsversorgung erstellt werden. Ein Erkennen von einem Betrieb im Überlastbereich, selbst wenn sie nur temporär und zeitlich begrenzt auftritt, wird auf diese Weise ermöglicht.

Ferner kann bei einer erfindungsgemäßen Spannungsversorgung vorgesehen sein, dass die Spannungsversorgung zum aktiven Senden zumindest von Teilen der in der Speichereinheit gespeicherten Betriebsdaten über die Busankopplung auf den Bus ausgebildet ist. Da die Spannungsversorgung einen Busankoppler zur Ankopplung an den Bus des Bussystems aufweist, stellt dies eine besonders bevorzugte Art und Weise für die Weitergabe der gespeicherten Betriebsdaten dar. Dadurch ist es möglich, dass die Spannungsversorgung selbstständig zumindest Teile der in der Speichereinheit gespeicherten Betriebsdaten über den Bus des Bussystems sendet. Insbesondere ist es dadurch möglich, kritische Betriebsparameter, die auf einen Betrieb der erfindungsgemäßen Spannungsversorgung im Überlastbereich hinweisen, zeitnah zu detektieren. Selbstverständlich ist auch denkbar, dass die Spannungsversorgung zu bestimmten Zeiten, insbesondere wiederholt, gespeicherte Betriebsdaten über den Bus sendet. Dadurch kann sichergestellt werden, dass zwischen den Auslesezeitpunkten der gespeicherten Betriebsdaten kein zu langer Zeitraum liegt, um einen möglichen Betrieb der Spannungsversorgung in einem Überlastbereich möglichst zeitnah zu detektieren.

Darüber hinaus kann bei einer erfindungsgemäßen Spannungsversorgung vorgesehen sein, dass die Spannungsversorgung eine Auswerteeinheit zum Auswerten der in der Speichereinheit gespeicherten Betriebsdaten aufweist. Dadurch ist es möglich, kritische Zustände der Spannungsversorgung, insbesondere den Betrieb der Spannungsversorgung in einem Überlastbereich, bereits in der Spannungsversorgung zu erkennen. Bei einem derartigen, durch die Auswerteeinheit erkannten, kritischen Zustand der Spannungsversorgung kann insbesondere bei einer vorhandenen akustischen Anzeige ein akustisches Warnsignal ausgegeben werden. Des Weiteren ist auch, falls vorgesehen, das aktive Senden der gespeicherten Betriebsdaten über den Bus denkbar. Dadurch kann insbesondere die Zeit, die zwischen dem Auftreten eines kritischen Betriebszustandes und dem Erkennen des kritischen Betriebszustandes durch den Benutzer verkürzt werden. Der Benutzer kann somit schneller auf einen kritischen Betriebszustand reagieren, wodurch sich wiederum die Lebensdauer einer erfindungsgemäßen Spannungsversorgung erhöht.

In einer Weiterentwicklung einer erfindungsgemäßen Spannungsversorgung kann vorgesehen sein, dass der Auswerteeinheit direkt an der Spannungsversorgung und/oder über eine Schnittstelle an der Spannungsversorgung und/oder über den Bus des Bussystems Parameter für die Auswertung übergebbar sind. Insbesondere können dadurch Parameter, die auf einen kritischen Betriebszustand der Spannungsversorgung schließen lassen, der Spannungsversorgung übergeben werden. Dadurch, dass diese Parameter nicht fest in der Spannungsversorgung festgeschrieben sind, ist eine erfindungsgemäße Spannungsversorgung vielseitig einsetzbar, da sich die Parameter nachträglich ändern und somit veränderten Betriebsumständen anpassen lassen. Dabei kann vorgesehen sein, dass direkt an der Spannungsversorgung, etwa über einen Schalter, die Parameter eingegeben werden. Ferner kann eine Schnittstelle vorgesehen sein, welche kabelgebunden oder kabelungebunden sein kann. Durch eine derartige Schnittstelle ist das Anschließen eines externen Gerätes an die Spannungsversorgung möglich, welches an die Spannungsversorgung und insbesondere an die Auswerteeinheit der Spannungsversorgung die Parameter für die Auswertung übergeben kann. Besonders bevorzugt ist dabei, dass über den Bus des Bussystems Parameter für die Auswertung an die Auswerteeinheit der Spannungsversorgung übergeben werden. Dadurch können die im Bus bereits vorhandenen Datenleitungen auch für diese Übertragung der Parameter verwendet werden. Dies stellt eine besonders einfache und kostengünstige Art und Weise dar, der Auswerteeinheit der Spannungsversorgung Parameter zu übergeben.

Ferner kann bei einer erfindungsgemäßen Spannungsversorgung vorgesehen sein, dass die Speichereinheit eine Rücksetzfunktionalität zum Zurücksetzen der gespeicherten Betriebsdaten aufweist. Dadurch ist es insbesondere möglich, die Speichereinheit der erfindungsgemäßen Spannungsversorgung einem Neustart zu unterziehen. Die gespeicherten Betriebsdaten werden dabei gelöscht und die Speichereinheit steht zur erneuten Speicherung von Betriebsdaten wieder zur Verfügung. Ein derartiges Zurücksetzen der gespeicherten Betriebsdaten kann dabei intern in der Spannungsversorgung ausgelöst werden. Dies ist beispielsweise denkbar, wenn die Speichereinheit derart viele Betriebsdaten gespeichert hat, dass keine neuen Betriebsdaten mehr abgespeichert werden könnten. In einem derartigen Fall kann es sinnvoll sein, intern ein Zurücksetzen der gespeicherten Betriebsdaten vorzunehmen. Ferner kann selbstverständlich ein externes Starten der Rücksetzfunktionalität der Speichereinheit vorgesehen sein. Dies ist insbesondere denkbar nach einem Auslesen der gespeicherten Daten. Ferner kann an der erfindungsgemäßen Spannungsversorgung ein so genannter Reset-Taster vorgesehen sein, wobei bei einem Druck auf den Reset-Taster über die Rücksetzfunktionalität ein Zurücksetzen der gespeicherten Betriebsdaten ausgelöst wird.

Insbesondere kann bei einer Weiterentwicklung der erfindungsgemäßen Spannungsversorgung vorgesehen sein, dass das Zurücksetzen der gespeicherten Betriebsdaten direkt an der Spannungsversorgung und/oder über eine Schnittstelle an der Spannungsversorgung und/oder über den Bus des Bussystems auslösbar ist. Der Benutzer einer erfindungsgemäßen Spannungsversorgung kann somit insbesondere verschiedenste Möglichkeiten besitzen, eine die Rücksetzfunktionalität der Spannungsversorgung auszulösen. Beispielsweise kann direkt an der Spannungsversorgung ein Taster vorgesehen sein, der bei einem Druck die Rücksetzfunktionalität in Gang setzt. Ferner kann beispielsweise eine Schnittstelle an der Spannungsversorgung vorgesehen sein, wobei beim Anschluss eines externen Gerätes an die Schnittstelle über das externe Gerät die Rücksetzfunktionalität der Spannungsversorgung ausgelöst werden kann. Eine derartige Schnittstelle kann dabei kabelgebunden oder kabelungebunden sein. Besonders bevorzugt ist dabei, wenn über den Bus des Bussystems die Rücksetzfunktionalität auslösbar ist. Dies ermöglicht insbesondere auch ein ferngesteuertes Auslösen der Rücksetzfunktionalität. Der Benutzer muss zum Zurücksetzen der gespeicherten Betriebsdaten somit nicht mehr die Spannungsversorgung lokal aufsuchen, sondern kann von einem entfernten Ort, der einen Zugriff auf den Bus des Bussystems zulässt, die Rücksetzfunktionalität der Spannungsversorgung auslösen. Dies stellt eine besonders hohe Flexibilität der Rücksetzfunktionalität einer erfindungsgemäßen Spannungsversorgung und damit einer erfindungsgemäßen Spannungsversorgung dar.

Gemäß einem zweiten Aspekt der Erfindung wird die Aufgabe durch ein Bussystem für die Gebäudeinstallationstechnik mit einem Bus, mit mindestens einem an dem Bus angeordneten Busgerät und zumindest einer an dem Bus angekoppelten Spannungsversorgung gelöst. Insbesondere ist das erfindungsgemäße Bussystem dadurch gekennzeichnet, dass die Spannungsversorgung gemäß dem ersten Aspekt der Erfindung ausgestaltet ist. Sämtliche Vorteile, die in Verbindung mit einer erfindungsgemäßen Spannungsversorgung beschrieben sind, gelten somit selbstverständlich auch für ein erfindungsgemäßes Bussystem der Gebäudeinstallationstechnik, das eine derartige Spannungsversorgung aufweist.

Ferner kann bei einem erfindungsgemäßen Bussystem vorgesehen sein, dass das Bussystem zum Auslesen der in der Speichereinheit der Spannungsversorgung gespeicherten Betriebsdaten über dem Bus ausgebildet ist. Dadurch ist es möglich, auf die in der Speichereinheit der Spannungsversorgung gespeicherten Betriebsdaten aktiv von außen über den Bus des Bussystems zuzugreifen. Ein Auslesen der gespeicherten Betriebsdaten ist somit möglich, ohne dass der Benutzer direkt an der Spannungsversorgung tätig werden muss. Ein Auslesen ist an jedem beliebigen Punkt möglich, an dem der Benutzer auf den Bus des Bussystems zugreifen kann. Dies stellt für den Benutzer eine besonders angenehme und einfache Art und Weise dar, auf die gespeicherten Betriebsdaten der Spannungsversorgung zuzugreifen.

Die vorliegende Erfindung wird anhand der beigefügten Zeichnungsfiguren näher erläutert. Es zeigen schematisch:
- Fig. 1: einen Ausschnitt eines Bussystems der Gebäudeinstallationstechnik und
- Fig. 2: eine erfindungsgemäße Spannungsversorgung.

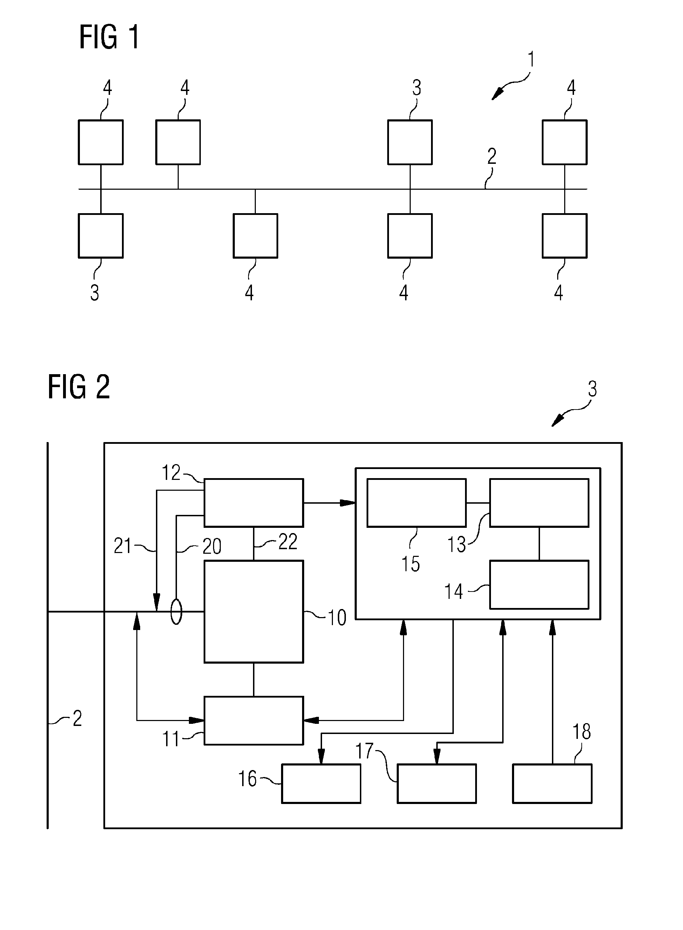

Elemente mit gleicher Funktion und Wirkungsweise sind in den Figuren 1 und 2 jeweils mit denselben Bezugszeichen versehen.

In Fig. 1 ist schematisch ein Bussystem 1 für die Gebäudeinstallationstechnik gezeigt. Das Bussystem 1 kann dabei ein KNX-Bus oder ein anderes Bussystem 1 der Gebäudeinstallationstechnik sein. Das Bussystem 1 weist dabei insbesondere einen Bus 2 auf, an dem mehrere Busgeräte 4 und in diesem Fall zwei erfindungsgemäße Spannungsversorgungen 3 angeschlossen sind. Die Busgeräte 4 und die Spannungsversorgungen 3 können dabei prinzipiell beliebig am Bus 2 des Bussystems 1 angeordnet sein. Durch eine ungünstige Anordnung der Busgeräte 4 in Bezug auf die Spannungsversorgungen 3 kann es jedoch vorkommen, dass zumindest eine der beiden Spannungsversorgungen 3 in einem Überlastbereich betrieben wird. Dies kann selbstverständlich auch nur temporär auftreten. Durch den Einsatz von erfindungsgemäßen Spannungsversorgungen 3 ist es möglich, die Betriebsdaten der Spannungsversorgungen 3 zu speichern, und so Betriebe der Spannungsversorgungen 3 in einem Überlastbereich auch zu einem späteren Zeitpunkt, wenn die Spannungsversorgungen 3 wieder im Normalbereich betrieben werden, zu erkennen. Der Benutzer einer erfindungsgemäßen Spannungsversorgung 3 ist somit in der Lage, auch auf einen nur zeitweiligen Betrieb der Spannungsversorgung 3 im Überlastbereich zu reagieren und zukünftig einen Betrieb der Spannungsversorgung 3 im Normalbereich sicherzustellen. Die Belastung einer erfindungsgemäßen Spannungsversorgung 3 im Betrieb kann so vermindert, die Lebensdauer entsprechend verlängert werden.

Fig. 2 zeigt den schematischen Aufbau einer erfindungsgemäßen Spannungsversorgung 3. Die Spannungsversorgung 3 ist dabei an einem Bus 2 eines Bussystems 1 für die Gebäudeinstallationstechnik angeschlossen. Die Spannungsversorgung 3 versorgt über eine Stromversorgung 10 den Bus bzw. die daran angeschlossenen Busgeräte 4 mit Energie. Diese elektrische Energie wird dazu verwendet, den Bus 2 des Bussystems 1 mit elektrischer Spannung zu versorgen. Zur Ankopplung der Spannungsversorgung 3 an dem Bus 2 des Bussystems 1 ist eine Busankopplung 11 vorgesehen. Diese Busankopplung 11 übernimmt den Datenverkehr. Die Betriebsdaten der Spannungsversorgungen 3 werden durch eine Erfassungseinheit 12 überwacht. Mögliche Betriebsdaten sind dabei ein Strom 20, eine Spannung 21 und eine Temperatur 22. Selbstverständlich sind auch weitere durch die Erfassungseinheit 12 überwachte Betriebsdaten denkbar. Die Betriebsdaten werden anschließend von einer Auswerteeinheit 15 ausgewertet und in einer Speichereinheit 13 abgespeichert. Durch eine Auswertung in der Auswerteeinheit 15 können die durch die Erfassungseinheit 12 gemessenen Betriebsdaten einer ersten Wertung unterzogen werden. Dadurch ist es möglich, bereits in der Spannungsversorgung 3 kritische Betriebszustände der Spannungsversorgung 3 zu erkennen. Ferner ist eine Ausgabeeinrichtung 14 vorgesehen, über die in der Speichereinheit 13 gespeicherte Betriebsdaten ausgegeben werden können. Dadurch ist es möglich, den Benutzer einer erfindungsgemäßen Spannungsversorgung 3 über die gespeicherten Betriebsdaten zu informieren. Dabei kann beispielsweise über die Ausgabeeinrichtung 14 eine Anzeige 16 angesteuert werden, über die die gespeicherten Betriebsdaten angezeigt werden können. Auch ist eine Schnittstelle 17 denkbar, über die ein externes Analysegerät angeschlossen werden kann, auf das die in der Speichereinheit 13 in gespeicherten Daten geladen und anschließend analysiert werden können. Des Weiteren kann ein Taster 18 vorgesehen sein, über den beispielsweise ausgewählt werden kann, welche der gespeicherten Daten über die Anzeige 16 angezeigt werden. Selbstverständlich ist auch ein Senden der gespeicherten Daten über die Busankopplung 11 auf den Bus 2 des Bussystems 1 denkbar. Somit ist es möglich, die in der Speichereinheit 13 gespeicherten Betriebsdaten der Spannungsversorgung 3 direkt über den Bus 2 des Bussystems 1 auszulesen. Dabei kann das Auslesen über den Bus 2 des Bussystems 1 sowohl ein aktives Senden der gespeicherten Daten durch die Spannungsversorgung 3 als auch ein passives Auslesen der gespeicherten Daten über den Bus 2 des Bussystems 1 von außen sein.

Zusammenfassend lässt sich sagen, dass durch eine erfindungsgemäße Spannungsversorgung, insbesondere durch die Möglichkeit, Betriebsdaten in einer Speichereinheit abzuspeichern, der Benutzer einer derartigen Spannungsversorgung in die Lage versetzt wird, über die Betriebszustände der Spannungsversorgung auch im Nachhinein informiert zu werden. Kritische Betriebszustände, die die Lebensdauer einer derartigen Spannungsversorgung verkürzen, können so frühzeitig erkannt und im Folgenden insbesondere beseitigt werden. Die Lebensdauer einer erfindungsgemäßen Spannungsversorgung kann somit deutlich verlängert werden.

Die voranstehende Erläuterung der Ausführungsformen beschreibt die vorliegende Erfindung nur im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 1: Bussystem
- 2: Bus
- 3: Spannungsversorgung
- 4: Busgerät

- 10: Stromversorgung
- 11: Busankopplung
- 12: Erfassungseinheit
- 13: Speichereinheit
- 14: Ausgabeeinrichtung
- 15: Auswerteeinheit
- 16: Anzeige
- 17: Schnittstelle
- 18: Taster

- 20: Strom
- 21: Spannung
- 22: Temperatur

## Patentansprüche

1. Spannungsversorgung (3) für einen Bus (2) eines Bussystems (1) der Gebäudeinstallationstechnik, aufweisend eine Stromversorgung (10), eine Busankopplung (11) und eine Erfassungseinheit (12) zum Feststellen von Betriebsdaten,
**dadurch gekennzeichnet,**
**dass** eine Speichereinheit (13) zum Speichern der festgestellten Betriebsdaten vorgesehen ist.

2. Spannungsversorgung (3) nach Anspruch 1,
**dadurch gekennzeichnet,**
**dass** als Betriebsdaten ein Strom (20), eine Spannung (21), eine Überlast und/oder eine Temperatur (22) der Spannungsversorgung (3) feststellbar sind.

3. Spannungsversorgung (3) nach wenigstens einem der vorhergehenden Ansprüche,
**dadurch gekennzeichnet,**
**dass** in der Speichereinheit (13) Minimal- und/oder Maximalwerte der festgestellten Betriebsdaten speicherbar sind.

4. Spannungsversorgung (3) nach wenigstens einem der vorhergehenden Ansprüche,
**dadurch gekennzeichnet,**
**dass** die Spannungsversorgung (3) eine Ausgabeeinrichtung (14) zum zumindest teilweisen Ausgeben der in der Speichereinheit (13) gespeicherten Betriebsdaten aufweist.

5. Spannungsversorgung (3) nach Anspruch 4,
**dadurch gekennzeichnet,**
**dass** die Ausgabeeinrichtung (14) eine optische und/oder eine akustische Anzeige (16) aufweist.

6. Spannungsversorgung (3) nach Anspruch 4 oder 5, **dadurch gekennzeichnet,**
**dass** die Ausgabeeinrichtung (14) eine Schnittstelle (17) aufweist.

7. Spannungsversorgung (3) nach wenigstens einem der vorhergehenden Ansprüche,
**dadurch gekennzeichnet,**
**dass** die Spannungsversorgung (3) zum aktiven Senden zumindest von Teilen der in der Speichereinheit (13) gespeicherten Betriebsdaten über die Busankopplung (11) auf den Bus (2) ausgebildet ist.

8. Spannungsversorgung (3) nach wenigstens einem der vorhergehenden Ansprüche,
**dadurch gekennzeichnet,**
**dass** die Spannungsversorgung (3) eine Auswerteeinheit (15) zum Auswerten der in der Speichereinheit (13) gespeicherten Betriebsdaten aufweist.

9. Spannungsversorgung (3) nach Anspruch 8,
**dadurch gekennzeichnet,**
**dass** der Auswerteeinheit (15) direkt an der Spannungsversorgung (3) und/oder über eine Schnittstelle (17) an der Spannungsversorgung (3) und/oder über den Bus (2) des Bussystems (1) Parameter für die Auswertung übergebbar sind.

10. Spannungsversorgung (3) nach wenigstens einem der vorhergehenden Ansprüche,
**dadurch gekennzeichnet,**
**dass** die Speichereinheit (13) eine Rücksetzfunktionalität zum Zurücksetzen der gespeicherten Betriebsdaten aufweist.

11. Spannungsversorgung (3) nach Anspruch 10,
**dadurch gekennzeichnet,**
**dass** das Zurücksetzten der gespeicherten Betriebsdaten direkt an der Spannungsversorgung (3) und/oder über eine Schnittstelle (17) an der Spannungsversorgung (3) und/oder über den Bus (2) des Bussystems (1) auslösbar ist.

12. Bussystem (1) für die Gebäudeinstallationstechnik mit einem Bus (2), mit mindestens einem an dem Bus (2) angekoppelten Busgerät (4) und zumindest einer an dem Bus (2) angekoppelten Spannungsversorgung (3),
**dadurch gekennzeichnet,**
**dass** die Spannungsversorgung (3) nach wenigstens einem der vorherigen Ansprüche ausgestaltet ist.

13. Bussystem (1) nach Anspruch 12,
**dadurch gekennzeichnet,**
**dass** das Bussystem (1) zum Auslesen der in der Speichereinheit (13) der Spannungsversorgung (3) gespeicherten Betriebsdaten über den Bus (2) ausgebildet ist.
